# EUROPÄISCHE PATENTSCHRIFT

(11) **EP 0 528 853 B1**
(45) Veröffentlichungstag und Bekanntmachung des Hinweises auf die Patenterteilung: **28.09.1994**
(21) Anmeldenummer: 91908693.4
(22) Anmeldetag: 25.04.1991
(51) Int. Cl.: C09D 5/44, C09D 5/08

(54) **VERFAHREN ZUM BESCHICHTEN ELEKTRISCH LEITFÄHIGER SUBSTRATE UND KATHODISCH ABSCHEIDBARER WÄSSRIGER ELEKTROTAUCHLACK**
PROCESS FOR COATING ELECTRICALLY CONDUCTIVE SUBSTRATES AND AQUEOUS CATHODICALLY PRECIPITABLE ELECTRO-DIPCOAT ENAMEL
PROCEDE D'ENDUCTION DE SUBSTRATS ELECTROCONDUCTEURS ET VERNIS AQUEUX DE TREMPAGE ELECTROPHORETIQUE CATHODIQUEMENT PRECIPITABLE

(30) Priorität: 16.05.1990 DE 4015703
(43) Veröffentlichungstag der Anmeldung: 03.03.1993
(73) Patentinhaber: BASF Lacke + Farben AG, 48165 Münster-Hiltrup (DE)
(72) Erfinder: RÜHL, Dieter, D-4400 Münster (DE); ARLT, Klaus, D-4403 Senden (DE); HEILMANN, Ulrich, D-4400 Münster (DE); HEIMANN, Ulrich, D-4400 Münster (DE)
(74) Vertreter: Münch, Volker, Dr.
(86) Internationale Anmeldenummer: EP9100803
(87) Internationale Veröffentlichungsnummer: WO9118063

(56) Entgegenhaltungen:
- EP-A- 0 324 951
- AT-B- 387 970
- DE-A- 3 532 806

## Beschreibung

Die Erfindung betrifft ein Verfahren zum Beschichten elektrisch leitfähiger Substrate, bei dem
(1) das elektrisch leitfähige Substrat in einen wäßrigen Elektrotauchlack getaucht wird
(2) das Substrat als Kathode geschaltet wird
(3) durch Gleichstrom ein Film auf dem Substrat abgeschieden wird
(4) das beschichtete Substrat aus dem Elektrotauchlack entfernt wird und
(5) der abgeschiedene Lackfilm eingebrannt wird.

Die Erfindung betrifft auch einen kathodisch abscheidbaren wäßrigen Elektrotauchlack.

Das oben beschriebene kathodische Elektrotauchlackierverfahren ist bekannt (vgl. z.B. DE-OS-35 18 732, DE-OS-35 18 770, EP-A-4090, EP-A-12 463 und EP-A-262 069) und wird insbesondere zur Grundierung von Automobilkarosserien eingesetzt.

Mit Hilfe des kathodischen Elektrotauchlackierverfahrens können - insbesondere bei Verwendung von Elektrotauchlacken, die kationische, aminmodifizierte Epoxidharze als Bindemittel enthalten - qualitativ hervorragende Lackierungen erhalten werden.

Zur Erhöhung der Korrosionsschutzwirkung enthalten die in Rede stehenden Elektrotauchlacke bleihaltige Pigmente. Diese Pigmente sind in toxikologischer und ökologischer Hinsicht nicht unbedenklich. Es ist ein erklärtes Ziel der Lackhersteller, die bleihaltigen Korrosionsschutzpigmente durch bleifreie Korrosionsschutzpigmente zu ersetzen. Obwohl eine Vielzahl bleifreier Korrosionsschutzpigmente bekannt ist, konnte dieses Ziel bislang nicht erreicht werden. Der Grund dafür liegt darin, daß ein Ersatz bleihaltiger Korrosionsschutzpigmente immer auch Verschlechterungen der Korrosionsschutzwirkung und/oder der Biegeelastizität und/oder der Haftung und/oder der Stoßelastizität der erhaltenen Lackierungen und/oder der Verlaufseigenschaften und/oder des Umgriffverhaltens der Elektrotauchlacke zur Folge hat. Auch die in der DE-OS-35 32 806 offenbarten bleifreien Korrosionsschutzpigmente auf Basis von mit B₂O₃ und/oder WO₃ und/oder Mo0₃ und/oder Sn0₂ modifiziertem Zinksilikat machen da - obwohl sie auch für den Einsatz in Elektrotauchlacken empfohlen werden - keine Ausnahme.

Es sind viele Versuche unternommen worden, die mit dem Ersatz von bleihaltigen Korrosionsschutzpigmenten durch bleifreie Korrosionsschutzpigmente auftretenden Verschlechterungen der Lackeigenschaften durch Modifizierung der chemischen Struktur der Hauptbindemittel und/oder des Vernetzungsmittels und/oder des Reibharzes und/oder durch Variation der eingesetzten Mengen an Hauptbindemittel und/oder Vernetzungsmittel und/oder Reibharz und/oder durch Variation der Art und Menge der eingesetzten Pigmente und/oder Füllstoffe und/oder durch Zusatz spezieller Additive auszugleichen. Diese Versuche führten bislang nur zu unbefriedigenden Ergebnissen.

Die der vorliegenden Erfindung zugrundeliegende Aufgabenstellung besteht in der Verbesserung des oben beschriebenen Verfahrens zum Beschichten elektrisch leitfähiger Substrate. Die der vorliegenden Erfindung Zugrundeliegende Aufgabenstellung besteht insbesondere in der Bereitstellung von Elektrotauchlacken, die für das oben genannte Verfahren geeignet sind und bei denen bleihaltige Korrosionsschutzpigmente vollständig oder zumindest teilweise durch bleifreie Korrosionsschutzpigmente ersetzt worden sind, wobei die oben beschriebenen Nachteile nicht oder nur in vermindertem Ausmaß auftreten sollen.

Diese Aufgabe wird überraschenderweise durch ein Verfahren gemäß Oberbegriff des Patentanspruchs 1 gelöst, bei dem der wäßrige Elektrotauchlack 2 bis 10, vorzugsweise 4 bis 6 Gew.-% eines Korrosionsschutzpigmentes auf Basis von Zinksilikat in Kombination mit 1 bis 15, vorzugsweise 2 bis 4 Gew.-% eines feinstteiligen, mit Epoxisilan oder Aminosilan beschichteten Quarz- oder Cristobalitmehles enthält, wobei die Gewichtsprozente auf den Gesamtfestkörper des Elektrotauchlackes bezogen sind und das Korrosionsschutzpigment herstellbar ist durch Verschmelzen von 35 bis 65 Gew.-% Zn0, 15 bis 35 Gew.-% Si0₂ und 0 bis 20 Gew.-% B₂0₃ und/oder 0 bis 20 Gew.-% WO₃ und/oder 0 bis 20 Gew.-% Mo0₃ und/oder 0 bis 20 Gew.-% Sn0₂, wobei die Komponenten unter Verwendung mindestens eines der neben Zn0 und Si0₂ genannnten Oxide so zusammengeschmolzen werden, daß die Summe der Gewichtsprozente stets 100 Gew.-% ergibt.

Bei Verwendung der erfindungsgemäßen Elektrotauchlacke werden überraschenderweise Lackierungen erhalten, die den Lackierungen, die bei Verwendung von bleipigmenthaltigen Elektrotauchlacken erhalten werden, qualitativ ebenbürtig sind.

In der DE-OS-33 25 064 wird der Einsatz von mit Epoxisilan oberflächenbehandeltem Quarz- oder Wollastonitfeinstmehl als korrosionsschützende Füllstoffe in nichtwäßrigen Lacken beschrieben. Der DE-OS-33 25 064 sind keinerlei Hinweise darauf zu entnehmen, daß die spezielle erfindungsgemäße Kombination aus mit B₂03 und/oder W0₃ und/oder Mo0₃ und/oder Sn0₂ modifiziertem Zinksilikat und mit Epoxisilan oder Aminosilan oberflächenbehandeltem Quarz- oder Cristobalitfeinstmehl die beim Ersatz von bleihaltigen Korrosionsschutzpigmenten durch bleifreie Korrosionsschutzpigmente auftretenden Probleme in wäßrigen Elektrotauchlacken lösen kann.

Die erfindungsgemäß eingesetzten Elektrotauchlacke können als Bindemittel prinzipiell alle für die Herstellung von Elektrotauchlacken geeigneten kathodisch abscheidbaren fremd- oder selbstvernetzenden Kunstharze enthalten. Die erfindungsgemäß eingesetzten Elektrotauchlacke können auch Mischungen unterschiedlicher kathodisch abscheidbarer Kunstharze als Bindemittel enthalten.

Bevorzugt sind jedoch die Elektrotauchlacke, die fremd- oder selbstvernetzende, vorzugsweise fremdvernetzende kationische, aminmodifizierte Epoxidharze als Bindemittel enthalten. Derartige Elektrotauchlacke sind bekannt und werden beispielsweise in der DE-OS-35 18 770, DE-OS-35 18 732, EP-B-102 501, DE-OS-27 01 002, US-PS-4,104,147, EP-A-4090, EP-A-12 463, US-PS-4,031,050, US-PS 3,922,253, US-PS 4,101,486, US-PS 4,038,232 und US-PS-4,017,438 beschrieben. In diesen Patentdokumenten wird auch die Herstellung der in Rede stehenden kationischen, aminmodifizierten Epoxidharze ausführlich beschrieben.

Unter kationischen, aminmodifizierten Epoxidharzen werden kationische Reaktionsprodukte aus
(a) ggf. modifizierten Polyepoxiden und
(b) Aminen
verstanden. Diese kationischen, aminmodifizierten Epoxidharze können durch Umsetzung der Komponenten (a) und (b) und - falls notwendig - anschließender Protonierung hergestellt werden. Es ist aber auch möglich, ein unmodifiziertes Polyepoxid mit einem Amin umzusetzen und an dem so erhaltenen aminmodifizierten Epoxidharz weitere Modifizierungen durchzuführen.

Unter Polyepoxiden werden Verbindungen verstanden, die zwei oder mehr Epoxidgruppen im Molekül enthalten.

Besonders bevorzugte (a)-Komponenten sind Verbindungen, die herstellbar sind durch Umsetzung von
(i) einer Diepoxidverbindung oder eines Gemisches von Diepoxidverbindungen mit einem Epoxiäquivalentgewicht unter 2000 mit
(ii) einer unter den gegebenen Reaktionsbedingungen gegenüber Epoxidgruppen monofunktionell reagierenden, eine Phenol- oder Thiolgruppe enthaltenden Verbindung oder eines Gemisches solcher Verbindungen,
wobei die Komponenten (i) und (ii) in einem Molverhältnis von 10 : 1 bis 1 : 1, bevorzugt 4 : 1 bis 1,5 : 1, eingesetzt werden und die Umsetzung der Komponente (i) mit der Komponente (ii) bei 100 bis 190°C, gegebenenfalls in Anwesenheit eines Katalysators durchgeführt wird (vgl. DE-OS-35 18 770).

Weitere besonders bevorzugte (a)-Komponenten sind Verbindungen, die herstellbar sind durch eine bei 100 bis 195°C, gegebenenfalls in Anwesenheit eines Katalysators durchgeführte, durch einen monofunktionell reagierenden Starter, der entweder eine alkoholische OH-Gruppe, eine phenolische OH-Gruppe oder eine SH-Gruppe trägt, initiierte Polyaddition einer Diepoxidverbindung und/oder eines Gemisches von Diepoxidverbindungen, gegebenenfalls zusammen mit mindestens einer Monoepoxidverbindung, zu einem Epoxidharz, in dem Diepoxidverbindung und Starter in einem Molverhältnis von größer 2 : 1 bis 10 : 1 eingebaut sind (vgl. DE-OS-35 18 732).

Polyepoxide, die zur Herstellung der besonders bevorzugten (a)-Komponenten und auch selbst als (a)-Komponenten einsetzbar sind, sind aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-4(-hydroxyphenyl)-1,1-isobutan, Bis-(4-hydroxy-tertiär-butylphenyl)-2,2-propan, Bis-(2-hydroxynaphthyl)-methan, 1,5-Dihydroxynaphthalin und phenolische Novolakharze geeignet.

Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)2,2-propan.
Es können auch Polyglycidylester von Polycarbonsäuren, wie z.B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Unter modifizierten Polyepoxiden werden Polyepoxide verstanden, in denen ein Teil der reaktionsfähigen Gruppen mit einer modifizierenden Verbindung umgesetzt worden ist.

Als Beispiele für modifizierende Verbindungen werden genannt:
a) Carboxylgruppenhaltige Verbindungen, wie gesättigte oder ungesättigte Monocarbonsäuren (z.B. Benzoesaure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder
b) aminogruppenhaltige Verbindungen, wie Diethylamin oder Ethylhexylamin oder Diamine mit sekundären Aminogruppen, z.B. N,N'-Dialkylalklendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z.B. Versamide, insbesondere endständige Aminogruppen enthaltende Umsetzungsprodukte aus Diaminen (z.B. Hexamethylendiamin), Polycarbonsäuren, insbesondere Dimerfettsäure und Monocarbonsäuren, insbesondere Fettsäuren oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder
c) hydroxylgruppenhaltige Verbindungen, wie Neopentylglykol, Bis-ethoxiliertes Neopentylglykol, Hydroxipivalinsäureneopentylglykolester, Dimethylhydantoin-N,N-diethanol, Hexandiol-1,6, Hexandiol-2,5, 1,4-Bis-(hydroximethyl)cyclohexan, 1,1-Isopropyliden-bis-(p-phenoxi)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder
d) gesättigte oder ungesättigte Fettsäuremethylester, die in Gegenwart von Natriummethylat mit Hydroxylgruppen der Epoxidharze umgeestert werden.

Als Komponente (b) können primäre und/oder sekundäre Amine eingesetzt werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin u. dgl. Geeignet sind ebenfalls Alkanolamine, wie z.B. Methylethanolamin, Diethanolamin u. dgl. Ferner sind Dialkylaminoalkylamine, wie z.B. Dimethylaminoethylamin, Diethylaminopropylamin, Dimethylaminopropylamin u. dgl. geeignet. Es können auch ketimingruppenhaltige Amine, wie z.B. das Methylisobutyldiketimin von Diethylentriamin, eingesetzt werden. In den meisten Fällen werden niedermolekulare Amine verwendet, doch ist es auch möglich, höhermolekulare Monoamine anzuwenden.

Die Amine können auch noch andere Gruppen enthalten, doch sollen diese die Umsetzung des Amins mit der Epoxidgruppe nicht stören und auch nicht zu einer Gelierung der Reaktionsmischung führen.

Bevorzugt werden sekundäre Amine als (b)-Komponenten eingesetzt.

Die für die Wasserverdünnbarkeit und elektrische Abscheidung erforderlichen Ladungen können durch Protonisierung mit wasserlöslichen Säuren (z.B. Borsäure, Ameisensäure, Milchsäure, bevorzugt Essigsäure) erzeugt werden.

Eine weitere Möglichkeit zur Einführung kationischer Gruppen in die Komponente (a) besteht in der Umsetzung von Epoxidgruppen der Komponente (a) mit Aminsalzen.

Die kationischen aminmodifizierten Epoxidharze können sowohl als fremdvernetzende Kunstharze als auch als selbstvernetzende Kunstharze eingesetzt werden. Selbstvernetzende kationische aminmodifizierte Epoxidharze können beispielsweise durch chemische Modifikation der kationischen aminmodifizierten Epoxidharze erhalten werden. Ein selbstvernetzendes System kann z.B. dadurch erhalten werden, daß das kationische aminmodifizierte Epoxidharz mit einem teilblockierten Polyisocyanat, das im Durchschnitt eine freie Isocyanatgruppe pro Molekül besitzt und dessen blockierte Isocyanatgruppen erst bei erhöhten Temperaturen entblockt werden, umgesetzt wird.

Als Vernetzungsmittel enthalten die bevorzugten Elektrotauchlacke blockierte Polyisocyanate.

Als blockierte Polyisocyanate können beliebige Polyisocyanate benutzt werden, bei denen Isocyanatgruppen mit einer Verbindung umgesetzt worden sind, so daß das gebildete blockierte Polyisocyanat gegenüber Hydroxyl- und Aminogruppen bei Raumtemperatur beständig ist, bei erhöhten Temperaturen, in der Regel im Bereich von etwa etwa 90°C bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis 36, insbesondere etwa 8 bis 15 Kohlenstoffatome enthalten. Beispiele geeigneter Diisocyanate sind Hexamethylendiisocyanat, 2,4-Toluylendiisocyanat, 2,6-Toluylendiisocyanat und 1-Isocyanatomethyl-5-isocyanato-1,3,3-trimethylcyclohexan. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyanate können beliebige geeignete aliphatische, cycloaliphatische oder aromatische Alkylmonoalkohole verwendet werden. Beispiele hierfür sind aliphatische Alkohole, wie Methyl-, Ethyl-, Chlorethyl-, Propyl-, Butyl-, Amyl-, Hexyl-, Heptyl-, Octyl-, Nonyl-,3,3,5-Trimethylhexyl-, Decyl- und Laurylalkohol, cycloaliphatische Alkohole, wie Cyclopentanol und Cyclohexanol; aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim oder Amine, wie Dibutylamin und Diisopropylamin. Die genannten Polyisocyanate und Blockierungsmittel können bei geeigneten Mengenverhältnissen auch zur Herstellung der oben erwähnten teilblockierten Polyisocyanate verwendet werden.

Das Vernetzungsmittel wird in der Regel in einer Menge von 5 bis 60 Gew.-%, bevorzugt 20 bis 40 Gew.-%, bezogen auf das kationische aminmodifizierte Epoxidharz, eingesetzt.

Es ist erfindungswesentlich, daß bei dem in Rede stehenden Verfahren ein Elektrotauchlack eingesetzt wird, der 2 bis 10, vorzugsweise 4 bis 6 Gew.-% eines Korrosionsschutzpigmentes auf Basis von Zinksilikat in Kombination mit 1 bis 15, vorzugsweise 2 bis 4 Gew.-% eines feinstteiligen, mit Epoxisilan oder Aminosilan beschichteten Quarz- oder Cristobalitmehles enthält, wobei die Gewichtsprozente auf den Gesamtfestkörper des Elektrotauchlackes bezogen sind und das Korrosionsschutzpigment herstellbar ist durch Verschmelzen von 35 bis 65 Gew.-% Zn0, 15 bis 35 Gew.-% Si0₂ und 0 bis 20 Gew.-% B₂0₃ und/oder 0 bis 20 Gew.-% WO₃ und/oder 0 bis 20 Gew.-% MoO₃ und/oder 0 bis 20 Gew.-% Sn0₂, wobei die Komponenten unter Verwendung mindestens eines der neben Zn0 und Si0₂ genannten Oxide so zusammengeschmolzen werden, daß die Summe der Gewichtsprozente stets 100 Gew.-% ergibt.

Die erfindungsgemäß einsetzbaren Korrosionsschutzpigmente und deren Herstellung werden in der DE-OS-35 32 806 beschrieben.

Es handelt sich um Korrosionsschutzpigmente auf Basis von Zinksilikat, das mit oxidischen Komplexbildnern oder Oxiden, die in der Lage sind, komplexe Polysäuren bzw. Heteropolysäuren zu bilden, modifiziert ist.

Die in Rede stehenden Korrosionsschutzpigmente sind herstellbar durch Verschmelzen von 35 bis 65 Gew.-% Zn0, 15 bis 35 Gew.-% Si0₂ und 0 bis 20 Gew.-% B₂0₃ und/oder 0 bis 20 Gew.-% WO₃ und/oder 0 bis 20 Gew.-% MoO₃ und/oder 0 bis 20 Gew.-% Sn0₂, wobei die Komponenten unter Verwendung mindestens eines der neben Zn0 und Si0₂ genannten Oxide so zusammengeschmolzen werden, daß die Summe der Gewichtsprozente stets 100 Gew.-% ergibt.

Geeignete Korrosionsschutzpigmente können aus ZnO, SiO₂ und B₂0₃ erhalten werden. Wenn eines oder mehrere der Oxide W0₃, Mo0₃ und Sn0₂ mitverwendet werden soll, dann soll vorzugsweise auch immer B₂O₃ in einer Menge von 5 bis 20, insbesondere 5 bis 10 Gew.-% eingesetzt werden. Bevorzugte Korrosionsschutzpigmente sind herstellbar, indem 40 bis 60 Gew.-% Zn0, 15 bis 25 Gew.-% SiO₂ und 5 bis 20 Gew.-%, vorzugsweise 5 bis 10 Gew.-% B₂O₃ mit wenigstens einem der Oxide WO₃, MoO₃ und SnO₂ in einer Menge von 5 bis 10 Gew.-% für WO₃, 5 bis 15 Gew.-% für Mo0₃ und 5 bis 10 Gew.-% für Sn0₂ zusammengeschmolzen werden. Ganz besonders bevorzugt werden solche Korrosionsschutzpigmente eingesetzt, die herstellbar sind, indem 50 bis 57, vorzugsweise 53 bis 54 Gew.-% ZnO, 25 bis 32, vorzugsweise 28 bis 29 Gew.-% SiO₂, 9 bis 12, vorzugsweise 10 bis 11 Gew.-% B₂O₃ und 6 bis 9, vorzugsweise 7 bis 8 Gew.-% WO₃ zusammengeschmolzen werden.

Die erfindungsgemäß eingesetzten Korrosionsschutzpigmente können durch Zusammenschmelzen der Ausgangsmaterialien bei Temperaturen von 1100 bis 1400°C, vorzugsweise bei 1200°C hergestellt werden. Der Schmelzprozeß sollte zweckmäßigerweise 1 bis 3 h, vorzugsweise etwa 2 h dauern.

Die dabei erhaltenen Produkte werden nach Abkühlen und Granulieren auf die geforderte Feinheit naßvermahlen, z.B. in einer Kugelmühle oder Schwingmühle. Vorzugsweise wird das Produkt granuliert, indem es aus dem Schmelzfluß in Wasser eingegossen wird. Die Naßvermahlung mit ca. 70 % Feststoffgehalt auf die gewünschte Feinheit führt dazu, daß eine partielle Hydrolyse zu hydratwasserhaltigen Molekülen erfolgt, die sich vorteilhaft auf die Entstehung von Haftkomplexen in Kombination mit entsprechenden Bindemitteln und dem Metallsubstrat auswirken können. Ein Vorteil dieses Prozesses ist außerdem darin zu sehen, daß die Pigmente als feststoffreiche Pasten erhalten werden können und auf diese Weise die primäre Teilchengröße und Teilchenfeinheit erhalten bleiben und keine Agglomerate, wie sie bei Trocknungsprozessen auftreten, entstehen können.

Die oben beschriebenen Pigmente können von der Firma Heubach GmbH & Co. KG, 3394 Langelsheim, bezogen werden.

Bei den erfindungsgemäß einsetzbaren feinstteiligen, mit Epoxisilan oder Aminosilan beschichteten Quarz- oder Cristobalitmehlen handelt es sich um feinstteilige Quarz- oder Cristobalitmehle, die durch Vermahlung von Quarz oder Cristobalit und nachfolgender Oberflächenbeschichtung mit Epoxisilanen oder Aminosilanen herstellbar sind. Derartige feinstteilige Mehle sind bekannt (vgl. z.B. Skudelny, D.: Silianisierte Füllstoffe und ihre Einsatzgebiete. Kunststoffe 77 (1987) 11, S. 1153 - 1156) und im Handel erhältlich (z.B. SILBOND® 800 AST, SILBOND® 800 EST, SILBOND® 4000 AST und SILBOND® 6000 EST der Quarzwerke GmbH). Als Epoxisilan wird üblicherweise 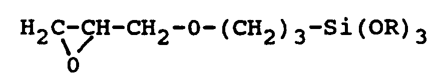
und als Aminosilan wird üblicherweise H₂N-(CH₂)₃Si(OR)₃ eingesetzt, wobei R für eine Methyl- oder eine Ethylgruppe steht. Die eingesetzten Quarz- und Cristobalitmehle sollten im Korngrößenbereich unter 15, vorzugsweise unter 10 µm liegen.

Der SiO₂-Gehalt der eingesetzten Quarz- oder Cristobalitmehle sollte über 95 Gew.-%, vorzugsweise über 97 Gew.-%, liegen. Die spezifische Oberfläche der eingesetzten Quarz- oder Cristobalitmehle kann zwischen 3,0 und 6,0, vorzugsweise zwischen 4,0 und 5,0 m²/g (BET, DIN 66132) liegen.

Quarz- und Cristobalitmehle der oben beschriebenen Art können von der Firma Quarzwerke GmbH, 5020 Frechen, bezogen werden.

Unter Gesamtfestkörper des Elektrotauchlackes wird die gesamte Menge an nichtflüchtigen Bestandteilen verstanden, die zurückbleibt, wenn der Elektrotauchlack zwei Stunden lang bei 130°C "getrocknet" wird.

Die Einarbeitung der erfindungsgemäßen Kombination aus Korrosionsschutzpigment und beschichtetem Quarz- oder Cristobalitmehl kann nach gut bekannten Methoden erfolgen. Es ist bevorzugt, die erfindungsgemäße Kombination in eine Pigmentpaste einzuarbeiten und diese Pigmentpaste dann in eine wäßrige Dispersion des kathodisch abscheidbaren Harzes und - falls vorhanden - Vernetzungsmittels einzuarbeiten.

Die Herstellung von Pigmentpasten ist allgemein bekannt und braucht hier nicht näher erläutert zu werden (vgl. D.H. Parker, Principles of Surface Coating Technology, Intercience Publishers, New York (1965); R.L. Yates, Electropainting, Robert Draper Ltd., Teddington/England (1966); H.F. Payne, Organic Coating Technology, Band 2, Wiley and Sons, New York (1961)).

Die Pigmentpasten können neben der erfindungsgemäßen Kombination im Prinzip alle für Elektrotauchlacke geeigneten Pigmente enthalten. Im allgemeinen ist Titandioxid das einzige oder das hauptsächliche weiße Pigment. Andere weiße Pigmente oder Streckmittel, wie Antimonoxid, Zinkoxid, Bariumcarbonat, Porzellan, Ton, Kalciumcarbonat, Aluminiumsilikat und Magnesiumsilikat können aber auch verwendet werden. Als farbige Pigmente können beispielsweise Cadmiumgelb, Cadmiumrot, Ruß, Phthalocyaninblau, Chromgelb, Toluidiylrot und hydratisiertes Eisenoxid benutzt werden.

Die Pigmentpaste kann neben den Pigmenten auch noch Weichmacher, Füllstoffe, Netzmittel usw. enthalten.

Die erfindungsgemäß eingesetzten Elektrotauchlacke können neben dem kathodisch abscheidbaren Kunstharz und der Pigmentpaste noch weitere üblichen Zusatzstoffe enthalten, wie z.B. Zusatzlösemittel, Antioxidantien, oberflächenaktive Mittel usw.

Der Festkörper der erfindungsgemäß eingesetzten Elektrotauchlacke beträgt vorzugsweise 7 bis 35 Gew.-Teile, besonders bevorzugt 12 bis 25 Gew.-Teile. Der pH-Wert der Elektrotauchlacke liegt zwischen 6 und 8, vorzugsweise zwischen 6,5 und 7,5.

Der Elektrotauchlack wird mit einer elektrisch leitenden Anode und mit dem als Kathode geschalteten elektrisch leitfähigen Substrat in Berührung gebracht. Beim Durchgang von elektrischem Strom zwischen Anode und Kathode wird ein fest haftender Lackfilm auf der Kathode abgeschieden.

Die angelegte Spannung kann in einem großen Bereich schwanken und kann z.B. zwischen zwei und tausend Volt liegen. Typischerweise wird aber mit Spannungen zwischen 50 und 500 Volt gearbeitet. Die Stromdichte liegt in der Regel zwischen etwa 10 und 100 Ampere/m2. Im Verlauf der Abscheidung neigt die Stromdichte zum Abfallen.

Nach der Abscheidung wird der beschichtete Gegenstand abgespült und ist zum Einbrennen bereit.

Die abgeschiedenen Lackfilme werden im allgemeinen bei Temperaturen von 130 bis 200°C über eine Zeitdauer von 10 bis 60 Minuten, vorzugsweise bei 150 bis 180°C über eine Zeitdauer von 15 bis 30 Minuten, eingebrannt.

Das erfindungsgemäße Verfahren kann zum Beschichten von beliebigen elektrisch leitenden Substraten, insbesondere aber zum Beschichten von Metallen, wie Stahl, Aluminium, Kupfer und dergleichen eingesetzt werden.

Die Erfindung wird in den folgenden Beispielen näher erläutert. Alle Angaben über Teile und Prozentsätze sind Gewichtsangaben, falls nicht ausdrücklich etwas anderes festgestellt wird. 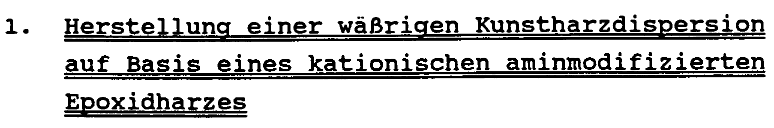
1.1 Herstellung eines aminmodifizierten Epoxidharzes
In einem Reaktionsgefäß werden 1818 g Epikote 1001 (EEW (Epoxidäquivalentgewicht) 490, Fa. Shell), 243 g Dodecylphenol und 108 g Xylol vorgelegt und unter Inertgasatmosphäre bei 110°C geschmolzen. Anschließend werden unter leichtem Vakuum Wasserspuren durch Auskreisen entfernt. Dann gibt man 3,3 g N,N-Dimethylbenzylamin zu, erwärmt die Reaktionsmischung auf 130°C, und hält diese Temperatur für ca. 3 Std., bis das EEW auf 1110 angestiegen ist. Sodann kühlt man und gibt in rascher Abfolge 135 g Butylglykol, 136 g Diethanolamin und 239 g Xylol zu. Dabei steigt die Temperatur kurzzeitig an. Danach läßt man das Reaktionsgemisch auf 90°C abkühlen und hält noch 30 min. bei dieser Temperatur. Danach gibt man zur weiteren Verdünnung 135 g Propylenglykolmonophenylether und 340 g Isobutanol zu und kühlt auf 65°C. Die Mischung wird nun mit 43 g N,N-Dimethylaminopropylamin versetzt und bei 80°C 3 h lang ausreagiert. Die Harzlösung hat einen Festkörper von 70 Gew.-%, einen Basengehalt von 0,96 meq/g und eine Viskosität von 4,2 d Pas (40 %ig in Solvenon PM, Platte-Kegel-Viskosimeter bei 23°C).
1.2 Herstellung eines Vernetzungsmittels
In einem Reaktor, der mit einem Rührer, Rückflußkühler, Innenthermometer und Inertgaseinleitung ausgestattet ist, werden 1.133 g Toluylendiisocyanat (Mischung aus etwa 80 % 2,4- und 20 % 2,6-Isomeren) und 356 g Methylisobutylketon unter Stickstoffatmosphäre vorgelegt. Man gibt 0,7 g Dibutylzinndilaurat zu und trägt innerhalb von 4 Stunden 290 g Trimethylolpropan in Form kleiner Portionen in gleichen Zeitabständen ein. Die Kühlung wird so einreguliert, daß die Temperatur der Reaktionsmischung nicht über 45°C steigt. 30 min. nach Zugabe der letzten Portion Trimethylolpropan wird ein NCO-Äquivalentgewicht von 217 gemessen (bezogen auf Festanteile). Unter weiterer Kühlung läßt man nun innerhalb 1 Stunde 722 g n-Propylglykol zutropfen. Am Ende der Zugabe ist die Temperatur auf 86°C angestiegen. Man erwärmt nun auf 100°C und läßt eine weitere Stunde nachreagieren. Bei der anschließenden Kontrolle sind keine NCO-Gruppen mehr nachweisbar. Man kühlt ab und verdünnt mit 500 g Methylisobutylketon. Die Lösung dieses Polyurethanvernetzers hat einen Feststoffgehalt von 69,8 Gew.-% (1 Std. bei 130°C gemessen).
1.3 Herstellung einer wäßrigen Kunstharzdispersion
1120 g Harz gemäß Pkt. 1.1 und 420 g Vernetzungsmittel gemäß Pkt. 1.2 werden bei Raumtemperatur gerührt. Nachdem die Mischung homogen ist (15 min.) werden 2,2 g einer Entschäumerlösung¹⁾ und 18 g Eisessig eingerührt und 678 g entionisiertes Wasser über 4 Portionen verteilt zugegeben. Anschließend wird mit weiteren 1154 g entionisiertem Wasser in kleinen Portionen verdünnt.
Die resultierende wäßrige Dispersion wird in einer Vakuumdestillation von niedrigsiedenden Lösemitteln befreit mit entionisiertem Wasser auf einen Festkörper von 33 Gew.-% verdünnt und filtriert.
¹⁾ surfynol® (Handelsprodukt der Air Chemicals), 50 %ige Lösung in Ethylenglykolmonobutylether. 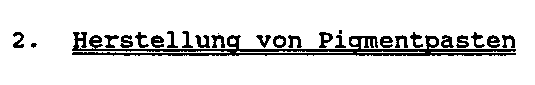
2.1 Herstellung eines Reibharzes
27,81 Teile Bisphenol A-diglycidylether, 1,44 Teile Xylol und 5,81 Teile Bisphenol A werden in Gegenwart von 0,002 Teilen Triphenylphosphin bei 150 - 160°C bis zu einem EEW (Epoxidäquivalentgewicht) von 345 umgesetzt. Der Ansatz wird dann mit 21,61 Teilen Butylglykol verdünnt und auf 49°C gekühlt. Dann wird eine Mischung aus 7,77 Teilen 9-Amino-3,6-dioxanonan-1-ol und 4,07 Teilen N,N-Dimethylaminopropylamin innerhalb von 6 min zugegeben, worauf die Temperatur auf 110°C steigt. Man hält die Mischung 1 Std. lang zwischen 110 und 115°C bevor 6,45 Teile Butylglykol zugegeben werden und der Ansatz auf 77°C gekühlt wird. Anschließend werden 14,9 Teile Nonylphenolglycidylether zugegeben. Die Temperatur steigt daraufhin auf 90°C an und wird dort 1 Std. gehalten bevor mit 10,03 Teilen Butylglykol verdünnt und gekühlt wird. Der Feststoffgehalt der dünnflüssigen Harzlösung liegt bei 60 Gew.-%.
2.2 Herstellung einer Pigmentpaste unter Verwendung der erfindungsgemäßen Kombination aus Korrosionsschutzpigment auf Basis von Zinksilikat und mit Epoxisilan beschichtetem Quarzmehl.
20,00 Teile des Reibharzes werden zusammen mit 20,00 Teilen entionisiertem Wasser, 6,50 Teilen einer 30 %igen wäßrigen Milchsäurelösung und 0,70 Teilen eines Entschäumers (Mihagan® 6449 OSHA, Handelsprodukt der Wintershall AG) vorgelegt und mit 33,00 Teilen Titandioxid, 10,00 Teilen Zinksilikat VP 192/4¹⁾, 6,00 Teilen Silbond® 800 EST²⁾, 2,10 Teilen eines Katalysators (Dibutylzinnoxid) und 0,64 Teilen Ruß intensiv vermischt. Diese Mischung wird in einem Mahlaggregat auf eine Hegman Feinheit von 10 bis 12 gemahlen. Dann werden 1,06 Teile deionisiertes Wasser zugegeben, um die gewünschte Pastenkonsistenz zu erhalten. Die graue Pigmentpaste weist eine sehr gute Lagerbeständigkeit auf.
¹⁾ Korrosionsschutzpigment auf Basis von Zinksilikat;
Hersteller: Heubach GmbH & Co. KG,
3394 Langelsheim, DE.

| | | |
|---|---|---|
| Technische Daten: | Zn0 | 53,5 % |
| | B₂0₃ | 10,5 % |
| | W0₃ | 7,5 % |
| | SiO₂ | 28,5 % |
| | PH-Wert | 8 |
| | Leitfähigkeit | 200 µS/cm |
| | Glühverlust | 0,7 % |
| | Ölzahl | 21 g/100 g |
| | Dichte | 3,3 g/cm³ |
| | Siebrückstand 32 µm | 0,1 % |
| | Coulter Counter | |
| | < 20 µm | 99 % |
| | < 16 µm | 97 % |
| | < 10 µm | 92 % |
| | < 5 µm | 80 % |
| | < 3 µm | 50 % |
| | mittl. Teilchendurchmesser | 4 µm |

²⁾ Mit Epoxisilan beschichtetes Quarzmehl, Hersteller: Quarzwerke GmbH, 5020 Frechen, DE. Chemische und physikalische Eigenschaften:

| Chemische Analyse (Gew.-%) | |
|---|---|
| SiO₂ | 97,5 |
| Al₂0₃ | 2,0 |
| Fe₂0 | 0,05 |
| Ca0 + Mg0³ | 0,1 |
| Na₂0 + K₂0 | 0,1 |
| Glühverlust | 0,55 |

| Partikelgrößenverteilung nach Cilas | |
|---|---|
| Korn Ø | Gesamtrückstand in Vol.-% |
| 8 µm | 1 |
| 6 µm | 6 ± 3 |
| 4 µm | 22 |
| 2 µm | 56 |

| | |
|---|---|
| Spez. Oberfläche BET m²/g (DIN 66132) : | 4,5 |
| Ölzahl g/100 (DIN 53199): | 26 |
| Schüttdichte g/cm³: | 0,5 |

2.3 Herstellung einer herkömmlichen Pigmentpaste unter Verwendung eines bleihaltigen Korrosionsschutzpigmentes
Es wird wie unter 2.2 beschrieben vorgegangen. Anstelle der Kombination aus Zinksilikat VP 192/4 und Silbond® 800 EST werden 6,76 Teile Aluminiumsilikat und 1,60 Teile Bleisilikat eingesetzt. Außerdem wird der Gehalt an Titandioxid auf 40,64 Teile heraufgesetzt. 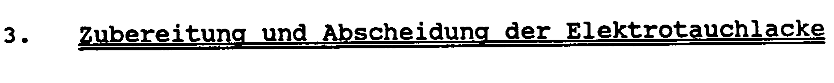 48,6 Gewichtsteile der Dispersion gemäß Pkt. 1.3 werden mit 12,9 Gewichtsteilen der Pigmentpaste gemäß Pkt. 2.2 bzw. Pkt. 2.3 (Vergleichsbeispiel) versetzt und mit entionisiertem Wasser auf einen Badfestkörper von 22 Gew.-% (2 h, 130°C) eingestellt.
Man läßt die Elektrotauchlacke 5 Tage bei Raumtemperatur unter Rühren altern. Die Abscheidung der Lackfilme erfolgt während 2 min. bei 350 V auf kathodisch geschalteten zinkphosphatierten Stahlprüftafeln sowie auf kathodisch geschalteten nicht vorbehandelten Stahltafeln. Die Badtemperatur wird hierbei auf 27°C gehalten. Die abgeschiedenen Naßfilme werden mit entionisiertem Wasser nachgespült und während 15 min. bei 165°C (Objekttemperatur) eingebrannt.

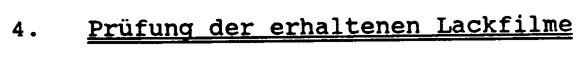

| | A¹⁾ | B²⁾ (Vergleich) |
|---|---|---|
| Schichtdicke (µm) | 20 - 22 | 20 - 22 |
| Verlauf³⁾ | 1,5 | 1,5 |

| Salzsprühtest ⁴⁾ | | |
|---|---|---|
| - Unterwanderung (mm) | < 1,8 | < 1,5 |
| - Flächenrost | 0 | 0 |

| Klimawechseltest (nach VDA 621/415) | | |
|---|---|---|
| - Unterwanderung (mm) | < 0,2 | < 0,5 |
| - Flächenrost | 0 | 0 |
| Erichsentiefung | 6,0 | 5,5 |
| Biegung ⁵⁾ (cm) | 1 | 1 - 2 |
| Umgriff nach Ford (cm) | 21 | 20 |
| VW-Steinschlag Test ⁶⁾ | 1 | 2 |

| | | |
|---|---|---|
| ¹⁾ Lackfilme, hergestellt aus erfindungsgemäßem bleifreien Elektrotauchlack | | |
| ²⁾ Lackfilme, hergestellt aus bleihaltigem Elektrotauchlack (Vergleichsbeispiel) | | |
| ³⁾ Noten von 0 bis 5; beste Note: 0, schlechteste Note: 5 | | |
| ⁴⁾ Nach DIN 50021, Dauer: 360 Stunden, Auswertung der Ergebnisse nach DIN 53 167 | | |
| ⁵⁾ Biegung am konischen Dorn nach ISO-Norm 6860 (0 = bester Wert) | | |
| ⁶⁾ Noten von 0 - 10, beste Note: 0, schlechteste Note: 10 | | |

## Patentansprüche

1. Verfahren zum Beschichten elektrisch leitfähiger Substrate, bei dem
(1) das elektrisch leitfähige Substrat in einen wäßrigen Elektrotauchlack getaucht wird
(2) das Substrat als Kathode geschaltet wird
(3) durch Gleichstrom ein Film auf dem Substrat abgeschieden wird
(4) das beschichtete Substrat aus dem Elektrotauchlack entfernt wird und
(5) der abgeschiedene Lackfilm eingebrannt wird,
dadurch gekennzeichnet, daß der wäßrige Elektrotauchlack 2 bis 10, vorzugsweise 4 bis 6 Gew.-% eines Korrosionsschutzpigmentes auf Basis von Zinksilikat in Kombination mit 1 bis 15, vorzugsweise 2 bis 4 Gew.-% eines feinstteiligen, mit Epoxisilan oder Aminosilan beschichteten Quarz- oder Cristobalitmehles enthält, wobei die Gewichtsprozente auf den Gesamtfestkörper des Elektrotauchlackes bezogen sind und das Korrosionsschutzpigment herstellbar ist durch Verschmelzen von 35 bis 65 Gew.-% Zn0, 15 bis 35 Gew.-% Si0₂ und 0 bis 20 Gew.-% B₂0₃ und/oder 0 bis 20 Gew.-% WO₃ und/oder 0 bis 20 Gew.-% Mo0₃ und/oder 0 bis 20 Gew.-% Sn0₂, wobei die Komponenten unter Verwendung mindestens eines der neben Zn0 und Si0₂ genannten Oxide so zusammengeschmolzen werden, daß die Summe der Gewichtsprozente stets 100 Gew.-% ergibt.

2. Kathodisch abscheidbarer, wäßriger Elektrotauchlack, dadurch gekennzeichnet, daß er 2 bis 10, vorzugsweise 4 bis 6 Gew.-% eines Korrosionsschutzpigmentes auf Basis von Zinksilikat in Kombination mit 1 bis 15, vorzugsweise 2 bis 4 Gew.-% eines feinstteiligen, mit Epoxisilan oder Aminosilan beschichteten Quarz- oder Cristobalitmehles enthält, wobei die Gewichtsprozente auf den Gesamtfestkörper des Elektrotauchlackes bezogen sind und das Korrosionsschutzpigment herstellbar ist durch Verschmelzen von 35 bis 65 Gew.-% Zn0, 15 bis 35 Gew.-% Si0₂ und 0 bis 20 Gew.-% B₂0₃ und/oder 0 bis 20 Gew.-% WO₃ und/oder 0 bis 20 Gew.-% Mo0₃ und/oder 0 bis 20 Gew.-% Sn0₂, wobei die Komponenten unter Verwendung mindestens eines der neben Zn0 und Si0₂ genannten Oxide so zusammengeschmolzen werden, daß die Summe der Gewichtsprozente stets 100 Gew.-% ergibt.

3. Verfahren oder Elektrotauchlack nach einem der Ansprüche 1 oder 2, dadurch gekennzeichnet, daß der Elektrotauchlack ein kationisches, aminmodifiziertes Epoxidharz oder eine Mischung aus kationischen, aminmodifizierten Epoxidharzen als Bindemittel enthält.

4. Verfahren oder Elektrotauchlack nach einem der Ansprüche 1 bis 3, dadurch gekennzeichnet, daß der Elektrotauchlack ein blockiertes Polyisocyanat oder eine Mischung aus blockierten Polyisocyanaten als Vernetzungsmittel enthält.

5. Verfahren oder Elektrotauchlack nach einem der Ansprüche 1 bis 4, dadurch gekennzeichnet, daß das Korrosionsschutzpigment herstellbar ist durch Verschmelzen von 40 bis 60 Gew.-% ZnO, 15 bis 25 Gew-% Si0₂, 5 bis 20 Gew.-% B₂0₃ und 5 bis 10 Gew.-% W0₃ und/oder 5 bis 15 Gew.-% Mo0₃ und/oder 5 bis 10 Gew.-% Sn0₂, wobei die Komponenten so zusammengeschmolzen werden, daß die Summe der Gewichtsprozente stets 100 Gew.-% ergibt.

6. Verfahren oder Elektrotauchlack nach einem der Ansprüche 1 bis 5, dadurch gekennzeichnet, daß das Korrosionsschutzpigment herstellbar ist durch Verschmelzen von 50 bis 57, vorzugsweise 53 bis 54 Gew.-% ZnO, 25 bis 32, vorzugsweise 28 bis 29 Gew.-% SiO₂, 9 bis 12, vorzugsweise 10 bis 11 Gew.-% B₂O₃ und 6 bis 9, vorzugsweise 7 bis 8 Gew.-% WO₃, wobei die Komponenten so zusammengeschmolzen werden, daß die Summe der Gewichtsprozente stets 100 Gew.-% ergibt.

## Claims

1. Process for the coating of electrically conductive substrates, in which
(1) the electrically conductive substrate is immersed in an aqueous electrocoating paint,
(2) the substrate is connected as cathode,
(3) a film is deposited on the substrate using direct current,
(4) the coated substrate is removed from the electrocoating paint and
(5) the deposited paint film is baked,
characterized in that the aqueous electrocoating paint contains 2 to 10, preferably 4 to 6, % by weight of an anticorrosive pigment based on zinc silicate in combination with 1 to 15, preferably 2 to 4, % by weight of a very fine quartz powder or cristobalite powder coated with epoxysilane or aminosilane, the percentages by weight being based on the total solids content of the electrocoating paint and the anticorrosive pigment being preparable by fusing together 35 to 65% by weight of ZnO, 15 to 35% by weight of SiO₂ and 0 to 20% by weight of B₂O₃ and/or 0 to 20% by weight of WO₃ and/or 0 to 20% by weight of MoO₃ and/or 0 to 20% by weight of SnO₂, the components being fused together using at least one of the cited oxides besides ZnO and SiO₂ in such a manner that the percentages by weight always total 100.

2. Cathodically depositable aqueous electrocoating paint, characterized in that it contains 2 to 10, preferably 4 to 6, % by weight of an anticorrosive pigment based on zinc silicate in combination with 1 to 15, preferably 2 to 4, % by weight of a very fine quartz powder or cristobalite powder coated with epoxysilane or aminosilane, the percentages by weight being based on the total solids content of the electrocoating paint and the anticorrosive pigment being preparable by fusing together 35 to 65% by weight of ZnO, 15 to 35% by weight of SiO₂ and 0 to 20% by weight of B₂O₃ and/or 0 to 20% by weight of WO₃ and/or 0 to 20% by weight of MoO₃ and/or 0 to 20% by weight of SnO₂, the components being fused together using at least one of the cited oxides besides ZnO and SiO₂ in such a manner that the percentages by weight always total 100.

3. Process or electrocoating paint according to either of Claims 1 and 2, characterized in that the electrocoating paint contains as binder a cationic amine-modified epoxy resin or a mixture of cationic amine-modified epoxy resins.

4. Process or electrocoating paint according to any one of Claims 1 to 3, characterized in that the electrocoating paint contains as crosslinking agent a blocked polyisocyanate or a mixture of blocked polyisocyanates.

5. Process or electrocoating paint according to any one of Claims 1 to 4, characterized in that the anticorrosive pigment can be prepared by fusing together 40 to 60% by weight of ZnO, 15 to 25% by weight of SiO₂, 5 to 20% by weight of B₂O₃ and 5 to 10% by weight of WO₃ and/or 5 to 15% by weight of MoO₃ and/or 5 to 10% by weight of SnO₂, the components being fused together in such a manner that the percentages by weight always total 100.

6. Process or electrocoating paint according to any one of Claims 1 to 5, characterized in that the anticorrosive pigment can be prepared by fusing together 50 to 57, preferably 53 to 54, % by weight of ZnO, 25 to 32, preferably 28 to 29, % by weight of SiO₂, 9 to 12, preferably 10 to 11, % by weight of B₂O₃ and 6 to 9, preferably 7 to 8, % by weight of WO₃, the components being fused together in such a manner that the percentages by weight always total 100.

## Revendications

1. Procédé pour le revêtement de substrats électroconducteurs, lors duquel
(1) on plonge le substrat électroconducteur dans une laque aqueuse pour trempage électrophorétique
(2) on branche le substrat en tant que cathode
(3) on dépose à l'aide d'un courant continu un film sur le substrat
(4) on retire de la laque pour trempage électrophorétique le substrat revêtu et
(5) on soumet à cuisson le film de laque déposé,
caractérisé en ce que la laque aqueuse pour trempage électrophorétique contient de 2 à 10, de préférence de 4 à 6 % en poids d'un pigment de protection contre la corrosion à base de silicate de zinc en combinaison avec de 1 à 15, de préférence de 2 à 4 % en poids d'une farine de quartz ou de cristobalite, finement divisée, revêtue d'époxysilane ou d'aminosilane, les pourcentages en poids se rapportant à la matière solide totale de la laque pour trempage électrophorétique et le pigment de protection contre la corrosion pouvant être préparé par fusion de 35 à 65 % en poids de ZnO, de 15 à 35 % en poids de SiO₂ et de 0 à 20 % en poids de B₂O₃ et/ou de 0 à 20 % en poids de WO₃ et/ou de 0 à 20 % en poids de MoO₃ et/ou de 0 à 20 % en poids de SnO₂, les composants étant réunis par fusion par utilisation d'au moins un des oxydes nommés, à part ZnO et SiO₂, de sorte que la somme des pourcentages en poids se monte dans tous les cas à 100 % en poids.

2. Laque aqueuse pour trempage électrophorétique, déposable cathodiquement, caractérisée en ce qu'elle contient de 2 à 10, de préférence de 4 à 6 % en poids d'un pigment de protection contre la corrosion à base de silicate de zinc en combinaison avec de 1 à 15, de préférence de 2 à 4 % en poids d'une farine de quartz ou de cristobalite, finement divisée, revêtue d'époxysilane ou d'aminosilane, les pourcentages en poids se rapportant à la matière solide totale de la laque pour trempage électrophorétique et le pigment de protection contre la corrosion pouvant être préparé par fusion de 35 à 65 % en poids de ZnO, de 15 à 35 % en poids de SiO₂ et de 0 à 20 % en poids de B₂O₃ et/ou de 0 à 20 % en poids de WO₃ et/ou de 0 à 20 % en poids de MoO₃ et/ou de 0 à 20 % en poids de SnO₂, les composants étant réunis par fusion par utilisation d'au moins un des oxydes nommés, à part ZnO et SiO₂, de sorte que la somme des pourcentages en poids se monte dans tous les cas à 100 % en poids.

3. Procédé ou laque pour trempage électrophorétique selon l'une quelconque des revendications 1 ou 2, caractérisé en ce que la laque pour trempage électrophorétique contient en tant que liant une résine époxyde cationique modifiée aux amines ou un mélange de résines époxydes cationiques modifiées aux amines.

4. Procédé ou laque pour trempage électrophorétique selon l'une quelconque des revendications 1 à 3, caractérisé en ce que la laque pour trempage électrophorétique contient en tant qu'agent de réticulation un polyisocyanate bloqué ou un mélange de polyisocyanates bloqués.

5. Procédé ou laque pour trempage électrophorétique selon l'une quelconque des revendications 1 à 4, caractérisé en ce que l'on peut préparer le pigment de protection contre la corrosion par fusion de 40 à 60 % en poids de ZnO, de 15 à 25 % en poids de SiO₂, de 5 à 20 % en poids de B₂O₃ et de 5 à 10 % en poids de WO₃ et/ou de 5 à 15 % en poids de MoO₃ et/ou de 5 à 10 % en poids de SnO₂, les composants étant réunis par fusion de sorte que la somme des pourcentages en poids se monte dans tous les cas à 100 % en poids.

6. Procédé ou laque pour trempage électrophorétique selon l'une quelconque des revendications 1 à 5, caractérisé en ce que l'on peut préparer le pigment de protection contre la corrosion par fusion de 50 à 57, de préférence de 53 à 54 % en poids de ZnO, de 25 à 32, de préférence de 28 à 29 % en poids de SiO₂, de 9 à 12, de préférence de 10 à 11 % en poids de B₂O₃ et de 6 à 9, de préférence de 7 à 8 % en poids de WO₃, les composants étant réunis par fusion de sorte que la somme des pourcentages en poids se monte dans tous les cas à 100 % en poids.
